# EUROPEAN PATENT APPLICATION

(11) **EP 0 894 531 A2**
(43) Date of publication of application: **03.02.1999**
(21) Application number: 98500178.3
(22) Date of filing: 28.07.1998
(51) Int. Cl.: B01L 3/00, G01N 35/02, G01N 21/03

(54) **Device for holding analytical samples**

(30) Priority: 30.07.1997 ES 9702094
(71) Applicant: Grupo Grifols, S.A., 08150 Parets Del Valles, Barcelona (ES)
(72) Inventor: Martinell Gisper-Sauch, Enrique, 08010 Barcelona (ES)
(74) Representative: Duran Moya, Luis-Alfonso

(57) **Abstract**

The device comprises an elongated body (preferably moulded in alveolar form from transparent material), the said body constituting an elongated plate with cavities defined by cell-like portions which depend from the said plate, the extremities of the depending cell-like portions being closed by caps of part-spherical form and forming between adjacent cavities, transverse partitions which extend generally parallel to the axes of the cavities and which provide vertical surfaces adapted for engagement with a support clamp.

## Description

The present invention relates to a device which is intended to hold samples for analysis, which displays novel and inventive features.

In the clinical analysis sector mechanized supports are known which act as appropriate containers for a number of samples received in individual cavities of holders of various types enabling them to be placed in the most suitable position in the apparatus for analysing samples, which is provided with means to carry out the movements required in each of the said cavities, in order to carry out the successive mixing of reagents, agitating movements, incubations, etc. up to the time when the apparatus can automatically read the results of the tests in each of the said individual cavities.

At the present time, apart from test tubes and similar components which have been used traditionally, plates which are provided with a number of small containers or with cavities for individual analysis are also known as holders, together with so-called "cards" or "slides", which have a generally long and flat structure, forming a series of receptacles with a long and narrow shape, which hold several of the reagents and materials required in order to carry out tests and which are designed to hold the samples to be analysed.

Given this nowaday very extended duality, between the plates which are provided with containers or cavities and the so-called cards, the stages of handling the automatic analytical apparatus show certain complications since it is difficult for apparatus which is suitable for handling plates holding containers to be capable also of handling the so-called cards.

The aim of the present invention is to provide a solution to the problem mentioned above, by disclosing the means to make it possible for one single device to be used simultaneously to carry out the movements appropriate for the cavities of the type used in plates with containers, and those appropriate for cards carrying analytical reagents.

In order to achieve its aims, the present invention proposes the provision of an elongate component, preferably moulded in plastic material, the upper surface of which has in plan view, a very much elongated rectangular shape, from which there are extended a number of small containers which are cylindrical in shape and which have a base in the shape of a spherical cap, which is low in height, the size of these small containers corresponding to those of a strip of small containers on a sample-holding plate of the traditional type, while between each pair of the said small containers there are for each pair, extended partitions having a shape which is also substantially rectangular and the height of which is not greater than the lower limit of the spherical caps of the said small containers, with the exception of two of the said containers in which the lower base is extended to a lower level than the lower part of the small containers, with the aim of providing supporting feet for the device on a horizontal surface. The above-mentioned small transverse partitions project very slightly from the periphery of the individual cavities which are in the shape of small containers, adopting an upright shape, thus providing rectilinear supporting areas at the sides of the device enabling the said device to be fastened in a straightforward and efficient manner by means of a clamp, into a device for conveying the automatic analysing apparatus.

In order to understand the above description more fully, the accompanying drawings show by way of an example, one embodiment of the present invention which is illustrative but not limitative.

In the drawings: -

Figure 1 shows a plan view of a device embodying the present invention.

Figure 2 shows a lengthwise section of the device itself according to a symmetrical lengthwise axis.

Figures 3, 4, 5 and 6 are individual cross-sections on the cross-sectional planes indicated in Figure 2.

Figures 7 and 8 are respectively a side elevational view and a plan view of the device itself.

Figures 9 and 10 are individual views of the end surfaces of the device shown in Figure 7.

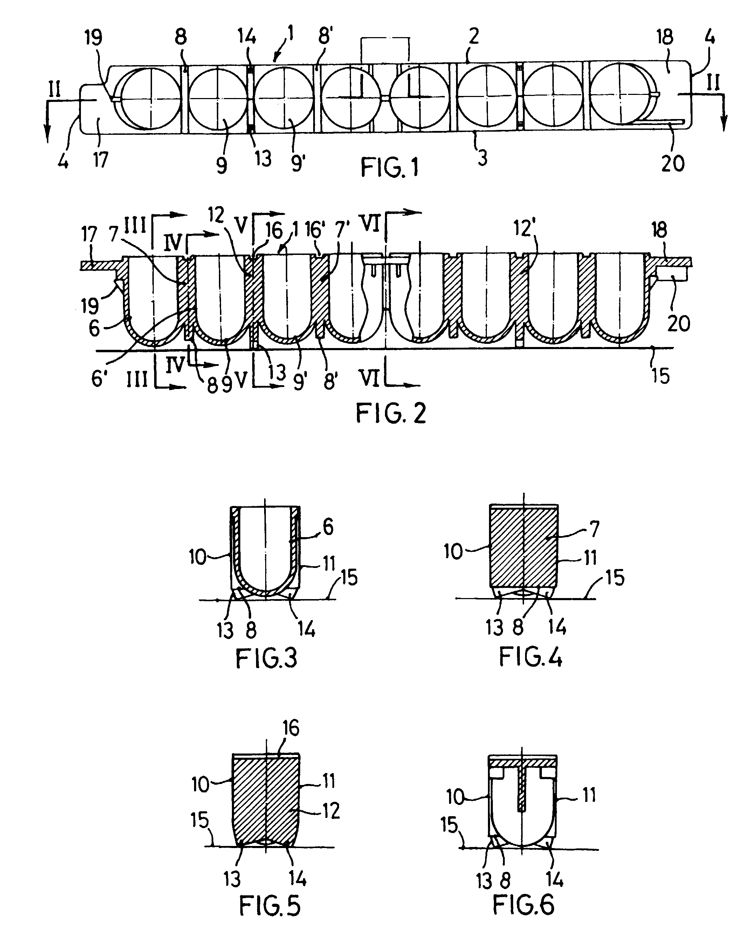

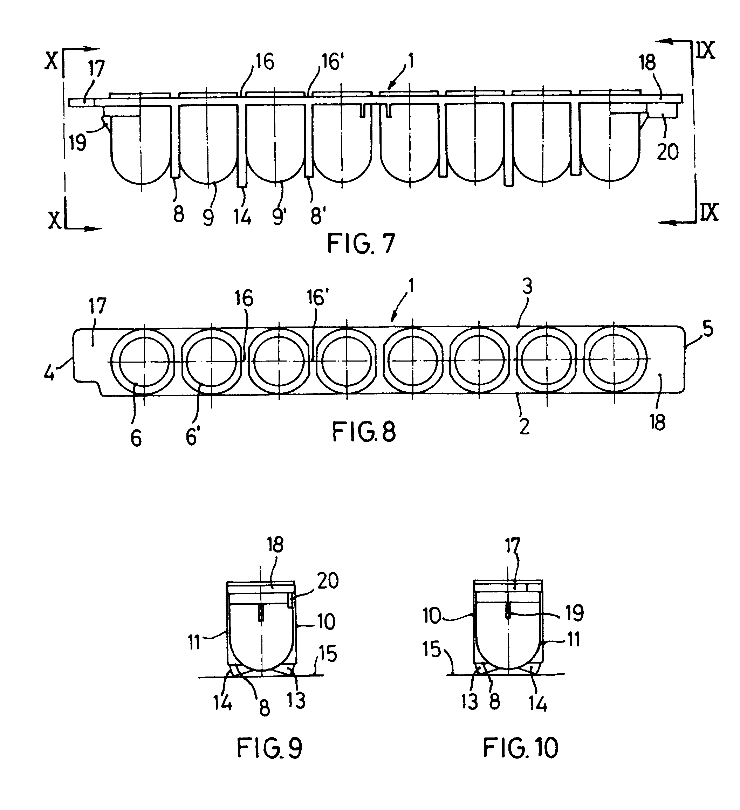

The device which embodies the present invention consists of a unit 1 of a structure which is generally rectangular and very much elongated in shape, having in plan view a rectangular shape with the greater sides 2 and 3 and the smaller sides 4 and 5 projecting over the extremities and the sides of the unit, the said unit comprising a plate having sides as shown and having a reduced thickness, as can be seen in Figure 2. Extending from the said plate are a number of small containers or cavities 6, 6' ... which are separated from each other by means of transverse partitions 7, 7' ... taking on the shape of rectangular components the lower edges of which such as 8, 8'... are not higher than the lowest points of the small containers 6, 6' ..., which are indicated by the numbers 9, 9' ... and which correspond to the shape of a spherical cap for the lower part of the above-mentioned small containers or cavities holding the samples and analytical reagents. The said small partitions 7, 7' have upright side walls such as 10 and 11 (Figures 3 and 4), which project slightly over the periphery of the corresponding small containers, giving rise to a superior view of the device 1, from the extremities, as can be seen in Figures 9 and 10, showing the rectangular structure which enables the device to be fastened in a straightforward and stable manner along the sides thereof by means, for example, of the clamp of an automatic device for conveying the clinical analysis apparatus.

Two of the above-mentioned transverse partitions, indicated by numbers 12 and 12', are taller than the lower extremities 9, 9' of the small containers of the device. thereby enabling supporting feet to be created for each of the said small containers, as can be seen in Figures 3 and 4, shown by numbers 13 and 14, which enable the device to be supported on a flat surface 15.

Between each two containers on the upper face of the device, i.e. the face corresponding to plate 5, there are found grooves such as 16, 16', and on the extremities 17 and 18 of the plate itself and on its lower face, there are found asymmetrical projections such as 19 and 20 which are designed to work together for the purpose of centring the device in the automatic analysing apparatus.

## Claims

1. A device for holding analytical samples, characterised in that it comprises an elongated body (preferably moulded in alveolar form from transparent material), the said body constituting an elongated plate with cavities defined by cell-like portions which depend from the said plate, the extremities of the depending cell-like portions being closed by caps of part-spherical form and forming between adjacent cavities, transverse partitions which extend generally parallel to the axes of the cavities and which provide vertical surfaces adapted for engagement with a support clamp.

2. A device for holding analytical samples according to claim 1, characterised in that at least two of the said transverse partitions extend to points lower than the lowest parts of the cell-like portions and terminate in support points for supporting the device on a flat surface.

3. A device for holding analytical samples according to claim 1 or claim 2, characterised in that the said elongated plate projects beyond the cell-like portions, both at the ends of the said plate and at the lateral edges thereof.
